# EUROPEAN PATENT APPLICATION

(11) **EP 1 939 835 A2**
(43) Date of publication of application: **02.07.2008**
(21) Application number: 07117699.4
(22) Date of filing: 02.10.2007
(51) Int. Cl.: G08G 1/123, G06Q 40/00, G07C 5/00, G08G 1/052

(54) **Device for the remote control of the driven distance of a vehicle**

(30) Priority: 03.10.2006 IT MI20061899
(71) Applicant: Cobra Automotive Technologies S.P.A., 21100 Varese (IT)
(72) Inventor: Trevisan, Marco, 21100, VARESE (IT); Camurati, Carlo, 21100, VARESE (IT)
(74) Representative: Ponzellini, Gianmarco

(57) **Abstract**

It is disclosed an integrated device capable of allowing remote control of the driven distance of a vehicle at predetermined time intervals by use of a GPS receiver (2) adapted to output information (3) relating to the position of the vehicle and of a GSM or GPRS transmitter (4) capable of sending data concerning the distance driven by the vehicle. The device further comprises a memory (6) containing information relating to geographic maps, a processing unit (7) adapted to calculate information for display of the vehicle's current position through use of the information received by the GPS receiver and the information relating to the geographic maps, and a monitor (8) for displaying the current-position information calculated by the processing unit (7).

## Description

The present invention relates to a device for remote control of the driven distance of a vehicle.

In particular, the present invention relates to an improved speedometer with an integrated automotive navigation system or satellite navigator for installation on a motor vehicle to enable an insurance company to check the true distance driven in a given period of time by the motor vehicle itself.

It is known that in recent years in the car insurance branch there has been a tendency to propose a reduction in the yearly premium to those motorists that in the insured period should have covered a rather reduced number of kilometres.

For instance, there are insurance companies that are ready to offer reduced rates to the insured party who during one year has covered distances that do not reach ten thousand kilometres.

Under this situation, there has been recently a diffusion on the market of devices which could enable remote control and checking of the kilometres really driven by the insured vehicle.

This type of apparatus, usually termed "Pay Per Use" or "PPU" essentially consist of a GPS receiver capable of detecting the vehicle's position and of a GSM/GPRS transmitter capable of transmitting the detected data to an information centre that can therefore check the true distance covered by the vehicle.

While this type of apparatus are becoming widespread on the market, they however have shown some market limits and highlighted some operating drawbacks.

It is to be pointed out first of all that the cost for a PPU apparatus is presently still rather high above all due to the high costs of the GSM modules.

It is therefore apparent that ultimately possible savings on the insurance policy are in fact greatly reduced due to the high cost of the control device.

In addition "Pay Per Use" devices are actually exclusively dedicated to the insurance field since no other application can be envisaged which can have some appeal or interest for the user.

Accordingly, the present invention aims at substantially solving the above mentioned drawbacks.

It is a first aim of the invention to encourage a motorist to purchase the product offering further possibilities of application in addition to those already currently provided by the modules on the market.

A further aim of the invention is to make available for the user a device that, while also performing functions fully different from those of the PPU module, has competitive costs and gives assurance to the insurance company that no fraud is possible.

An auxiliary aim of the invention is also to bring technical improvements to the module so as to reduce costs and increase reliability of same.

The foregoing and further aims that will be better clarified during the following description are substantially achieved by a device for remote control of the driven distance of a vehicle.

Further features and advantages will become more apparent from the detailed description of a device for remote control of the kilometric distance run by a car in accordance with the appended claims.

This description will be taken hereinafter with reference to the accompanying drawings given by way of non-limiting example, in which:
- Fig. 1 shows the device for remote control of the driven distance of a vehicle in a first operating configuration;
- Fig. 2 shows the device seen in Fig. 1 in a disassembled and non-operating condition;
- Fig. 3 is a block diagram illustrating the device in Fig. 1.

With reference to the drawings, a device for remote control of the driven distance of a vehicle has been generally identified with reference numeral 1.

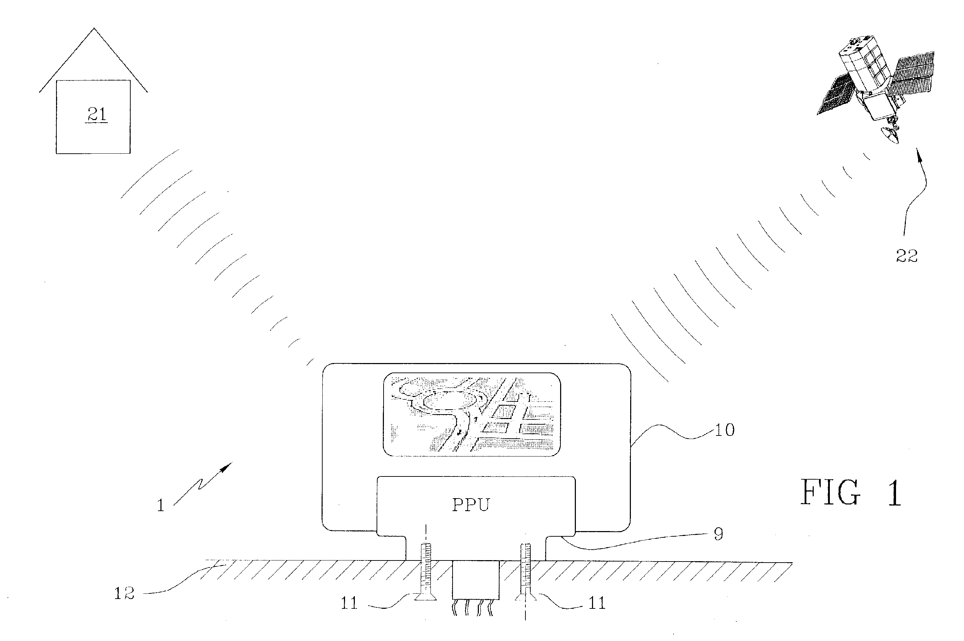

As can be viewed from Fig. 1, the device for remote control is essentially made up of a first module 9 that on installation is linked in an irremovable manner to vehicle 12 through suitable means 11, of known type and therefore not further described, which prevents removal from the vehicle by the user.

The first module 9 actually constitutes a speedometer Pay Per Use or "PPU" the function of which is to allow remote control of the kilometres covered by the motor vehicle in the period of validity of the insurance.

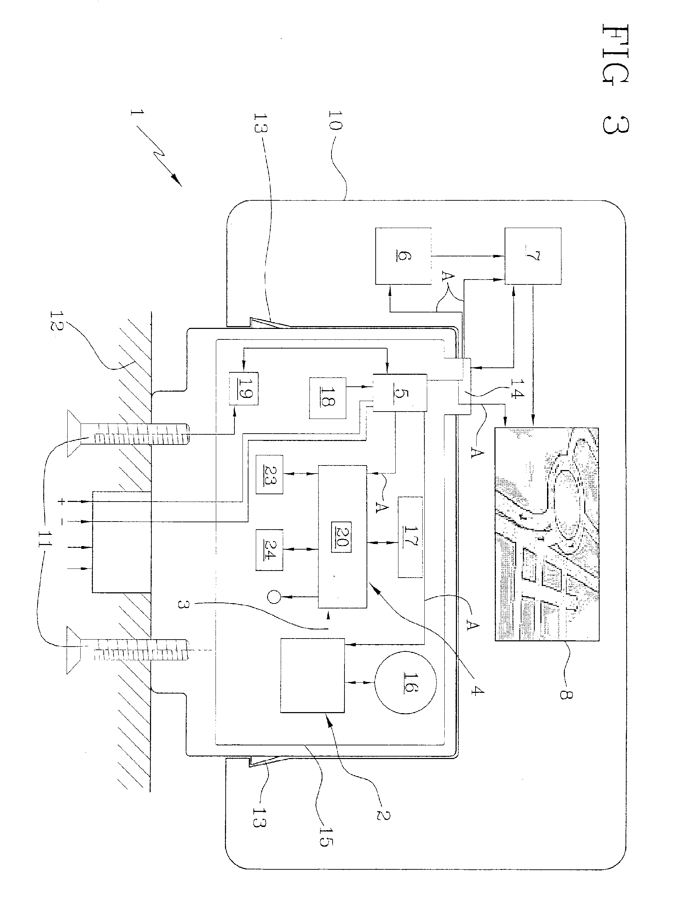

As shown in Fig. 3, the first module 9 first of all comprises at least one receiver 2 adapted to receive data from a satellite position-detecting system (shown in Fig. 1 and denoted at 22).

The receiver is also adapted to fix its position and output information 3 concerning the vehicle position at predetermined time instants.

From a construction point of view the satellite receiver 2 is made up of a CHIP-SET GPS or in any case a GPS module of known type receiving the signal from a corresponding antenna 16 associated therewith.

The first module 1 also comprises at least one wireless transmitter 4, a GSM or GPRS transmitter for example, which receives as an input the information 3 about the vehicle position and is able to send data concerning the position or the distance driven by the vehicle in a time interval to a remote receiving station (identified with 21 in Fig. 1). In particular, a GSM/GPRS module, type Siemens TC65, can be used.

Obviously the wireless transmitter 4 will be provided with a suitable SIM card 23 for identification of the transmitter by the receiving station 21 and also with a memory 24, a flash memory for example, capable of storing the data from the GPS module or also data calculated by the GSM/GPRS module for subsequent transmission.

In fact, should it be impossible to transmit the data to the receiving station 21 for any reason (due to the absence of signal, for example), due to memory 24 said data will not be lost. Obviously for data reception and transmission also a GSM antenna 17 is present.

Generally the satellite receiver 2 and wireless transmitter 4 are integrated into a single printed circuit or PCB 15 and, advantageously, antenna 17 for reception and transmission and the GPS antenna are integrated into the printed circuit 15 as well.

The above allows production costs to be reduced due to a smaller number of assembling operations, and the device reliability to be increased.

Still referring to Fig. 3 it is possible to notice the presence of electric connection means 5 adapted to connect device 1 to the battery of vehicle 12 and also capable of suitably converting the input current and voltage to enable all components of the system to receive the correct power supply A.

In this regard, at the connecting region with the vehicle, suitable connections to the battery will be made and also a connection capable of detecting switching on/off of the vehicle engine.

In order to ensure operation of the device, a buffer battery 18 is also present which is fed by the electric connection means 5 and is adapted to ensure electric autonomy in case of power failure.

In addition, module 1 can also optionally contemplate the presence of means 19 for detecting separation of the first module 9, which means is capable of signalling removal of the first module 9 itself from vehicle 12 and/or lack of power supply A by the battery.

In fact, occurrence of one of the two situations set out above could mean removal of the device while the vehicle is in use.

It is also to be pointed out that optionally an accident-detecting sensor, an accelerometer for example, can be connected to the first module itself in such a manner that, in case of problems, the same can transmit the detected information to the GSM module and then to the remote receiving station 21.

It will be appreciated that the first module 9 also comprises a processing unit 20 preferably directly incorporated into the GSM/GPRS transmitter, such as in the case of the Siemens TC65 model, that is able to receive the position data 3 coming from the satellite receiver and calculate the distance driven by the vehicle at each predetermined time interval.

From an operating point of view, the CPU 20 is programmed to transmit the calculated distance data for each switching on/off cycle of the vehicle in such a manner as to greatly reduce costs for telephone connection with station 21.

Obviously, it will be possible to provide for continuous transmission of the detected data should it also be important to inform the receiving station 21 about the vehicle position and/or the roads driven by the car.

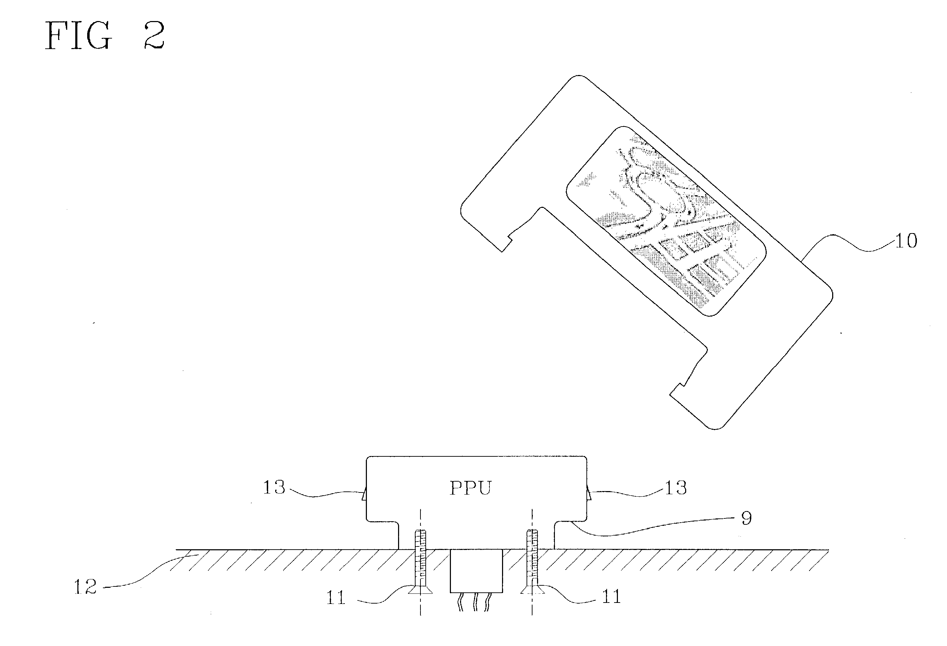

Turning back to Fig. 1 it is possible to notice the presence of a second module 10 which can be removably linked to the first module 9 (in this connection compare Figs. 1 and 2).

In particular, removable engagement means 13 is interposed between the first and second modules 9, 10 to enable engagement/release of the second module 10 with/from the first module 9 and allow removal of the second module 10 from vehicle 12 also after installation of device 1.

The presence in the second module of means 6 for storage of information relating to geographic maps is shown in Fig. 3. In particular, a memory will be present on which information about the vehicle's transit regions, or the road maps, is loaded.

A processing unit 7 is adapted to calculate the information for generating the correct displaying of the current position by utilising the information relating to the vehicle's position that will come from the GPS receiver 2 and the information relating to the geographic maps coming from the storage means 6.

For the purpose a monitor 8 is present which is able to display the information about the current position calculated by the processing unit 7. In order to enable operation of the second module, at least one communication line 14 between the two parts is present to enable passage of the electric power from the first to the second module and also bi-directional data transfer between the modules.

In particular the data communication line can be a connection through serial cable, for example. In this way monitor 8, memory 6 and processing unit 7 will be directly powered by the first module and in particular the vehicle's battery.

Also, the processing unit 7 will receive the vehicle's position data as an input but it will be also able to possibly show data relating to the PPU unit on the monitor, such as the residual kilometres to be driven in order not to overcome the limits imposed by the insurance company, for example.

Obviously, since a GSM module is present, further information that should come from station 21 can be also sent to the display.

The invention achieves important advantages.

First of all, incorporation into a single device of the functional qualities of a Pay Per Use apparatus and a satellite navigation system greatly increases the appeal of the product for the customer/final user.

In addition, union of the two technologies involves advantages for both devices.

In addition to the circuitry in common that is utilised both for Pay Per Use application and for satellite-navigation application, the navigator's monitor allows visual communication of additional data of the Pay Per Use unit or also data from the operating station 21.

On the other hand, due to the presence of power supply and of the electric connection means 5, optimal operation also of the satellite navigation system is ensured and the latter does not require external power supply and interfacing cables any longer.

It is finally to be recognised that since the monitor and some components of the navigator have a removable character, vehicle 12 is prevented from being damaged due to attempts made for stealing said components.

Vice versa, the irremovable character of the PPU unit ensures correct control by the insurance company as regards the true kilometres driven.

In addition, due to integration of a navigator with a PPU unit, the final consumer will be able to purchase the navigator representing a product of some interest and simultaneously to obtain important discounts on the insurance premium in the subsequent years.

## Claims

1. A device for remote control of the driven distance of a vehicle (12) in a predetermined time interval, comprising:
- at least one receiver (2) adapted to receive data from a satellite position-detecting system (22) and to fix its position, a GPS receiver for example, said receiver being able to output information (3) relating to the position of the vehicle (12) at predetermined time intervals;
- at least one wireless transmitter (4), a GSM or GPRS transmitter for example, receiving the vehicle position information (3) as an input and capable of sending data relating to the position or the driven distance of the vehicle in a predetermined time interval to a remote receiving station (21),
**characterised in that** it further comprises:
- means for storing information relating to geographic maps (6);
- a processing unit (7) adapted to calculate the information for display of the current position through use of the information (3) about the vehicle's (12) position coming from the satellite receiver (2) and the information relating to the geographic maps coming from said storing means (6); and
- a monitor (8) for displaying the current-position information calculated by the processing unit.

2. A device as claimed in claim 1, **characterised in that** it comprises at least one first module (9) containing at least said satellite receiver (2) and wireless transmitter (4) and a second module (10) containing at least said monitor (8).

3. A device as claimed in claim 2, **characterised in that** the first module (9) further comprises means (11) for irremovable engagement of the first module (9) itself with the vehicle (12), in order to avoid removal of same from the vehicle once it has been installed.

4. A device as claimed in claim 2, **characterised in that** it further comprises removable engagement means (13) between the first and second modules (9, 10) to enable engagement/release of the second module (10) with/from the first module (9) and removal of the second module (10) from the vehicle once the device (1) has been installed.

5. A device as claimed in anyone of claims 2 to 4, **characterised in that** it further comprises at least one communication line (14) between the first and second modules (9, 10) to enable passage of electric power supply (A) from the first to the second module and data transfer between the modules, said communication line being a connection through serial cable, for example.

6. A device as claimed in anyone of the preceding claims, **characterised in that** said satellite receiver (2) and wireless transmitter (4) are integrated into a single printed circuit (15).

7. A device as claimed in claim 6, **characterised in that** it further comprises a receiving antenna (16) for the satellite receiver (2) and a receiving/transmitting antenna (17) for the wireless transmitter (4), said antennas being integrated into the printed circuit (15) as well.

8. A device as claimed in anyone of the preceding claims, **characterised in that** it further comprises:
- electric connection means (5) to connect the device to the vehicle's (12) battery and suitably convert current and voltage for power supply to the wireless receiver (4) and the satellite transmitter (2); and
- a buffer battery (18) powered through the electric connection means (5) and capable of allowing an electric autonomy in case of power failure.

9. A device as claimed in anyone of the preceding claims, **characterised in that** it further comprises detecting means (19) of the separation of the first module (9) capable of signalling removal of the first module (9) from the vehicle (12) and/or cut-off of power supply (A) to the same by the vehicle's battery.

10. A device as claimed in claim 2, **characterised in that** the first module (9) comprises a processing unit (20) preferably incorporated into the GSM or GPRS transmitter, capable of receiving position data (3) coming from the satellite receiver (2) and of calculating the distance driven by the vehicle (12) every predetermined time interval.

11. A device as claimed in claim 10, **characterised in that** the processing unit (20) is programmed for transmitting the distance data calculated at each switching on/off cycle of the vehicle (12).
